# EUROPÄISCHE PATENTSCHRIFT

(11) **EP 2 746 613 B1**
(45) Veröffentlichungstag und Bekanntmachung des Hinweises auf die Patenterteilung: **21.06.2017**
(21) Anmeldenummer: 14001060.4
(22) Anmeldetag: 27.01.2010
(51) Int. Cl.: F16D 69/02, F16D 65/12

(54) **BREMSSCHEIBE FÜR EIN FAHRZEUG**
BRAKE DISC FOR A VEHICLE
DISQUE DE FRIEN POUR VÉHICULE

(30) Priorität: 09.02.2009 DE 102009008105
(43) Veröffentlichungstag der Anmeldung: 25.06.2014
(62) Teilanmeldung aus: 10702057.0
(73) Patentinhaber: Daimler AG, 70327 Stuttgart (DE)
(72) Erfinder: Lembach, Oliver, 75392 Deckenpfronn (DE); Mayer, Ralph, 71034 Böblingen (DE)
(74) Vertreter: JENSEN & SON

(56) Entgegenhaltungen:
- WO-A1-2008/070329
- WO-A1-2008/074030
- DE-A1- 10 203 507
- DE-C1- 4 413 306
- GB-A- 2 083 146
- US-A- 4 542 111

## Beschreibung

Die Erfindung betrifft eine Bremsscheibe für ein Fahrzeug nach den Merkmalen des Oberbegriffs des Anspruchs 1.
Aus dem Stand der Technik ist, wie in DE 10 2004 016 098 A1 beschrieben, eine Bremsscheibe für ein Fahrzeug sowie ein Verfahren zur Herstellung einer Bremsscheibe bekannt. Die Bremsscheibe weist mindestens einen Grundkörper auf, welcher mindestens partiell im Bereich seiner äußeren Oberfläche eine verschleißfeste Schicht trägt, die als Reibschicht dient, wobei mindestens eine Zwischenschicht als haftvermittelnde Schicht und/oder als Korrosionsschutzschicht zwischen dem Grundkörper und mindestens einer äußeren verschleißfesten Schicht aufgebracht wird und diese mindestens eine Zwischenschicht galvanisch aufgebracht wird.

In der DE 10 2005 008 569 A1 wird ein Reibelement und ein Verfahren zu dessen Herstellung beschrieben. In dem Verfahren wird ein Reibelementgrundkörper bereitgestellt und eine Beschichtung aufgebracht. Die Beschichtung weist eine Einschmelzlegierung auf und wird eingeschmolzen.

Aus der DE 102 03 507 A1 ist eine Bremsscheibe für ein Fahrzeug sowie ein Verfahren zu ihrer Herstellung bekannt. Die Bremsscheibe umfasst einen Grundkörper aus einem metallischen Werkstoff, insbesondere Grauguss, welcher wenigstens eine Reibfläche mit einer Beschichtung aus einem harten Material mit hohem Reibwert aufweist. Der Grundkörper wird um die Schichtdicke der Beschichtung abgedreht in Richtung achsparallel zur Achse der Bremsscheibe. Die Beschichtung besteht beispielsweise aus Aluminiumoxid, Diamant oder einem keramischen Material.

In der DE 103 42 743 A1 ist eine Bremsscheibe für ein Fahrzeug sowie ein Verfahren zu deren Herstellung beschrieben. Die Bremsscheibe umfasst einen Grundkörper, welcher eine mindestens im Bereich der äußeren Oberfläche verschleißfeste Schicht trägt, die als Reibschicht dient sowie einen Bereich aus einem Material zur Haftvermittlung zwischen dem Grundkörper und der mindestens einen verschleißfesten äußeren Schicht aufweist, wobei der Bereich aus dem Material zur Haftvermittlung und die verschleißfeste äußere Schicht als mindestens eine Gradientenschicht ausgebildet ist, deren Zusammensetzung sich in Schichtdickenrichtung ändert.

Aus der DE 103 45 000 B3 ist eine Vorrichtung und ein Verfahren zur Herstellung von Bremsteilen bekannt. Bei dem Verfahren zur Herstellung von Bremsteilen wird für deren ringförmige Bremsfläche eine Verschleißschutzschicht vorgesehen, die durch oberflächenseitiges Anschmelzen des Trägermaterials und Vermischen von Beschichtungswerkstoff mit der Schmelze gebildet und in das Trägermaterial eingebunden wird, wobei der Energieeintrag zum oberflächenseitigen Anschmelzen des Trägermaterials über Lichtwellen, Lichtbogen, Plasma und/oder Elektronenstrahl erfolgt und insbesondere, bevorzugt über einen Laser, als Strahlungsenergie in Form von Lichtwellen auf die anzuschmelzende Oberfläche einwirkt.

Das Patent DE 44 13 306 C1 beschreibt, dass zur Verstärkung eines Bauteiles aus einer Metalllegierung auf das Bauteil durch Hochgeschwindigkeitsflammspritzen mit einem Gemisch aus einem Pulver aus Verstärkungspartikeln und einem Pulver aus einer Metalllegierung eine Verstärkungsschicht mit einem Dichtegrad von mindestens 99,5 Vol.-% in einer Dicke von mindestens 1 mm aufgetragen wird.

Die Patentanmeldung DE 102 03 507 A1 betrifft eine Bremsscheibe für ein Fahrzeug, umfassend einen Grundkörper aus einem metallischen Werkstoff aus Grauguss, welcher eine Reibfläche mit einer Beschichtung aus einem harten Material mit hohem Reibwert aufweist. Der Grundkörper wird um die Schichtdicke der Beschichtung abgedreht in Richtung achsparallel zur Achse der Bremsscheibe. Die Beschichtung besteht aus Aluminiumoxid, Diamant oder einem keramischen Material. Die erfindungsgemäße Bremsscheibe hat den Vorteil, dass das Material temperaturbreit reibwertstabil ist.

Das US Patent US 4542111 beschreibt ein Spritzpulver für die Herstellung verschleißfester und temperaturbeständiger Beschichtungen von Maschinenteilen in Verbrennungskraftmaschinen, wie Kolbenringen, Feuerstegen und Kolbenböden von Kolben sowie den Reibflächen von Synchronringen, besteht aus 50 bis 90 Gew.-% Aluminiumoxid (Al2O3) und 5 bis 40 Gew.-% Titandioxid (TiO2) mit Zusätzen an 5 bis 30 Gew.-% Lanthanoxid (La2O3) und/oder Nioboxid (Nb2O3) mit gegebenenfalls 30 Gew.-% Calciumcarbonat (CaC03). Die im Plasmaspritzverfahren aufgetragenen Schichten erwiesen sich vor allem besonders warmfest und thermoschockbeständig, so daß sich mit ihnen vor allem ausbruchsichere, brandspursichere und verschleißfeste Beschichtungen an den kritischen Stellen der thermisch belasteter Maschinenteile herstellen lassen.

Der Erfindung liegt die Aufgabe zugrunde, eine verbesserte Bremsscheibe für ein Fahrzeug anzugeben.

Die Aufgabe wird erfindungsgemäß durch eine Bremsscheibe für ein Fahrzeug mit den Merkmalen des Anspruchs 1 gelöst..

Bevorzugte Ausgestaltungen und Weiterbildungen der Erfindung sind in den abhängigen Ansprüchen angegeben.

Die erfindungsgemäße Bremsscheibe für ein Fahrzeug umfasst einen Grundkörper aus Grauguss oder Stahl, welcher Reibflächen mit einer Beschichtung aus einem harten, verschleißbeständigen Material aufweist. Die Beschichtung weist Hartstoffe in der Form von Oxid-Keramik auf.

Die Hartstoffe aus Oxid-Keramik tragen erheblich zu einer verbesserten Verschleißbeständigkeit und guten sowie konstanten Reibwerten bei.

Die Oxidkeramik liegt dabei durch eine Binderphase oder eine Matrix gebunden vor, welche insbesondere durch Legierungen auf der Basis von Cr, Ni und/oder Fe gebildet sind. Hierzu zählen insbesondere auch Cr- und/oder Cr/Ni-Stähle.

Durch die erfindungsgemäße Lösung ist eine kostengünstige Bremsscheibe herstellbar, da ein Großteil der Bremsscheibe aus kostengünstigem Grauguss ist. Durch die Beschichtung weist die Bremsscheibe jedoch einen weitaus geringeren Verschleiß auf als eine Bremsscheibe, bei welcher auch die Reibflächen aus Grauguss gebildet sind. Des Weiteren sind durch diese Beschichtung eine Gewichtsreduzierung und eine Korrosionsreduzierung der Bremsscheibe erreichbar.

Die erfindungsgemäße Lösung ermöglicht einen gleichmäßigen Reibwert der Bremsscheibe und eine Reduzierung beim Bremsen auftretender Temperaturen, wodurch ein so genanntes Bremsenfading, d. h. ein Ausfall der Bremse aufgrund Überhitzung vermeidbar ist. Durch eine Reduzierung von Vibrationen und Geräuschen beim Bremsen ist zudem eine Komfortsteigerung erzielbar. Durch die erfindungsgemäße Lösung entfallen während einer Fertigung aufwändige Nachbehandlungen zu einer Oberflächenhärtung der Bremsscheibe.

Ausführungsbeispiele der Erfindung werden anhand einer Zeichnung näher erläutert. Dabei zeigt:

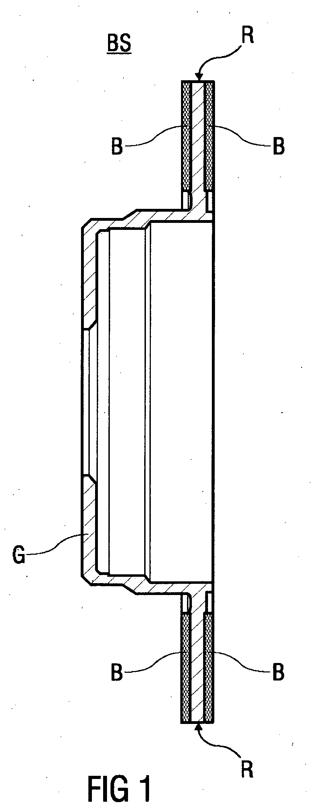

- Fig. 1: einen Längsschnitt durch eine erfindungsgemäße Bremsscheibe.

Figur 1 zeigt einen Längsschnitt durch eine erfindungsgemäße Bremsscheibe BS. Die Bremsscheibe BS ist gebildet aus einem Grundkörper G aus Grauguss oder Stahl. Die Reibflächen R der Bremsscheibe BS weisen eine Beschichtung B aus einem harten Material auf, welches als Verschleißschutzmaterial wirkt. Diese Beschichtung B umfasst als Hartstoffe Oxidkeramik. Derartige Beschichtungen können auch zu den Materialklassen der Cermets gehören.

Eine bevorzugte Beschichtung B ist aus Oxid-Keramik, beispielsweise aus Titanoxid (TiO2) und Aluminiumoxid (AL₂O₃) gebildet. Der Aluminiumoxid-Anteil liegt bevorzugt zwischen 60 Gewichtsprozent und 97 Gewichtsprozent und Titanoxid (TiO₂), vorzugsweise mit einem Anteil zwischen 3 Gewichtsprozent und 40 Gewichtsprozent. Besonders bevorzugt sind Zusammensetzungen mit 50-60% Al₂O₃ und 40-50% TiO₂.

Eine weitere Beschichtung ist ein Verbundwerkstoff aus Oxidkeramik in einer Metallmatrix, häufig auch als Cermet bezeichnet. Als metallische Matrix, ist insbesondere Edelstahl geeignet. Besonders geeignete Edelstähle sind Cr/Ni-Stähle, insbesondere 316L oder 1.4404. Die Keramik ist vorzugsweise mit einem Anteil von 50-80, bevorzugt 65 bis 75 Gewichtsprozent und die intermetallsiche Matrix vorzugsweise mit einem Anteil von 20-50%, bevorzugt 25-35 Gewichtsprozent enthalten. Die Keramik besteht vorzugsweise aus Aluminiumoxid (Al₂O₃) mit Titanoxid (TiO₂). Der Aluminiumoxid-Anteil in der Keramik liegt bevorzugt zwischen 60 Gewichtsprozent und 97 Gewichtsprozent und Titanoxid (TiO2) vorzugsweise bei einem Anteil zwischen 3 Gewichtsprozent und 40 Gewichtsprozent. Besonders bevorzugt sind Zusammensetzungen mit 50-60% Al₂O₃ und 40-50% TiO₂.

Durch eine Vorbehandlung des Grundkörpers G der Bremsscheibe BS vor einem Aufbringen der Beschichtung B, beispielsweise durch ein Anschleifen der Reibflächen R, sind eine optimale Beschichtung B und ein optimaler Halt der Beschichtung B auf dem Grundkörper G erzielbar.

Als Beschichtungsverfahren sind vorzugsweise Hochgeschwindigkeitsflammspritzen, Plasmaspritzen, Kaltgasspritzen oder Lichtbogendrahtspritzen anwendbar. Das Hochgeschwindigkeitsflammspritzen eignet sich besonders zur Erzeugung der Beschichtung B aus Carbiden. Das Plasmaspritzen ist zur Erzeugung der Beschichtung B aus Keramik, Cermet oder Metall geeignet. Zur Erzeugung der Beschichtung B aus Metall sind auch das Kaltgasspritzen und das Lichtbogendrahtspritzen geeignet.

Beim Hochgeschwindigkeitsflammspritzen wird unter Verwendung von Sauerstoff und einem Brennstoff in einer Spritzpistole eine chemische Reaktion erzeugt. Durch einen dadurch entstehenden Druck werden Spritzpartikel eines Beschichtungswerkstoffs mit sehr hoher Geschwindigkeit auf die zu beschichtenden Reibflächen R aufgebracht. Der Beschichtungswerkstoff ist der Spritzpistole als Draht oder in Pulverform zuführbar.

Beim Plasmaspritzen wird durch einen Lichtbogen und ein diesen Lichtbogen durchströmendes Plasmagas ein Plasma erzeugt. In einen sich dadurch bildenden Plasmagasstrom wird der Beschichtungswerkstoff in Pulverform eingebracht, welcher durch das Plasma aufgeschmolzen und durch den Plasmagasstrom auf die zu beschichtenden Reibflächen R aufgespritzt wird.

Beim Kaltgasspritzen wird der Beschichtungswerkstoff in Pulverform mit sehr hoher Geschwindigkeit auf die zu beschichtenden Reibflächen R aufgespritzt. Dazu wird ein relativ niedrig aufgeheiztes Prozessgas durch Expansion in einer Lavaldüse auf Überschallgeschwindigkeit beschleunigt, wodurch sich ein Gasstrahl bildet. In diesen Gasstrahl wird der Beschichtungswerkstoff injiziert. Der pulverförmige Beschichtungswerkstoff wird dabei auf eine so hohe Geschwindigkeit beschleunigt, dass er im Gegensatz zu anderen thermischen Spritzverfahren auch ohne vorangehendes An- oder Aufschmelzen beim Aufprall auf die zu beschichtenden Reibflächen R eine dichte und fest haftende Schicht bildet.

Beim Lichtbogendrahtspritzen wird der Beschichtungswerkstoff in Drahtform mittels eines Lichtbogens aufgeschmolzen. Sich dadurch bildende Spritzpartikel werden mittels eines Zerstäubergases auf die zu beschichtenden Reibflächen R aufgespritzt.

Des Weiteren ist die Beschichtung B beispielsweise auch mittels Laserstrahl, Elektronenstrahl oder Induktion aufbringbar, wobei der Beschichtungswerkstoff b

beispielsweise in Pulverform auf die zu beschichtenden Reibflächen R aufgebracht und mittels Laserstrahl, Elektronenstrahl oder Induktion aufgeschmolzen wird.

Durch eine Variation von Verfahrensparametern der genannten Beschichtungsverfahren ist die Beschichtung B optimierbar, so dass eine optimal auf dem Grundkörper G haftende Beschichtung B mit optimalen Eigenschaften erzielbar ist, d. h. eine verschleiß- und korrosionsbeständige Beschichtung B mit einem optimierten Geräusch-, Vibrations- und Temperaturverhalten.

## Patentansprüche

1. Bremsscheibe (BS) für ein Fahrzeug, umfassend einen Grundkörper (G) aus Grauguss oder Stahl, welcher Reibflächen (R) mit einer Beschichtung (B) aus einem harten Material aufweist, welche Oxid-Keramik umfasst,
**dadurch gekennzeichnet, dass**
die Beschichtung ein Verbundwerkstoff aus Oxidkeramik und Metallmatrix im Gewichtsprozentverhältnis von 50-80% zu 20-50% *ausweist,*
und die Keramik durch Al₂O₃ und TiO₂ im Gewichtsprozentverhältnis von 60-97% zu 3-40% gebildet ist und die Metallmatrix aus Cr/Ni-Stahl gebildet ist.

2. Bremsscheibe (BS) nach Anspruch 1,
**dadurch gekennzeichnet,**
**dass** die Beschichtung (B) auf Reibflächen (R) eines Grundkörpers (G) aus einem metallischen Werkstoff mittels Hochgeschwindigkeitsflammspritzen, Plasmaspritzen, Kaltgasspritzen oder Lichtbogendrahtspritzen aufgebracht ist.

## Claims

1. Brake disc (BS) for a vehicle, comprising a base body (G) made of grey cast iron or steel and having friction surfaces (R) with a coating (B) of a hard material including oxide ceramics,
**characterised in that**
the coating is a composite material of oxide ceramics and metal matrix with a percent-by-weight ratio of 50-80% to 20-50% and the ceramic material is represented by Al₂Oₛ and TiO₂ with a percent-by-weight ratio of 60-97% to 3-40% and the metal matrix is made of Cr/Ni steel.

2. Brake disc according to claim 1,
**characterised in that**
the coating (B) is applied to friction surfaces (R) of a base body (G) made of a metallic material by means of high-speed flame spraying, plasma spraying, cold gas spraying or arc wire spraying.

## Revendications

1. Disque de frein (BS) destiné à un véhicule automobile, comprenant un corps de base (G) constitué de fonte de moulage ou d'acier, qui présente des surfaces de friction comportant un revêtement (B) constitué d'un matériau dur qui comprend une céramique d'oxyde, **caractérisé en ce que** le revêtement présente une matière composite constituée de céramique à base d'oxyde et d'une matrice métallique ayant un rapport en pourcentage en poids allant de 50 à 80 % et de 20 à 50 %, et **en ce que** la céramique est formée par Al₂O₃ et TiO₂ dans un rapport en pourcentage en poids allant de 60 à 97 % et de 3 à 40 % et la matrice métallique est formée à partir de Cr/acier Ni.

2. Disque de frein (BS) selon la revendication 1, **caractérisé en ce que** le revêtement (B) est appliqué sur les surfaces de friction (R) d'un corps de base (G) constitué d'une matière métallique à l'aide de projection à la flamme haute vitesse, projection au jet de plasma, projection au gaz froid ou projection au fil à l'arc électrique.
